# EUROPEAN PATENT APPLICATION

(11) **EP 4 372 907 A1**
(43) Date of publication of application: **22.05.2024**
(21) Application number: 22840968.6
(22) Date of filing: 19.03.2022
(51) Int. Cl.: H01Q 1/24, H01Q 21/00, H04W 88/08

(54) **BASE STATION DEVICE**

(30) Priority: 15.07.2021 CN 202110798479
(71) Applicant: ZTE Corporation, Shenzhen, Guangdong 518057 (CN)
(72) Inventor: WANG, Jian, Shenzhen, Guangdong 518057 (CN); XU, Baoliang, Shenzhen, Guangdong 518057 (CN); YU, Wenping, Shenzhen, Guangdong 518057 (CN); HU, Maoxin, Shenzhen, Guangdong 518057 (CN); SUN, Weihua, Shenzhen, Guangdong 518057 (CN); NING, Shichao, Shenzhen, Guangdong 518057 (CN)
(74) Representative: Cristinelli, Luca
(86) International application number: PCT/CN2022/081862
(87) International publication number: WO 2023/284323

(57) **Abstract**

Provided in the present invention is a base station device, including: an active component, the active component including an active antenna and a first mounting structure, the active antenna being mounted on the first mounting structure; and a passive antenna component, the passive antenna component including a passive antenna and a second mounting structure, the passive antenna being mounted on the second mounting structure, wherein the first mounting structure and the second mounting structure are independently arranged and connected. Through the technical solution provided in the present invention, the technical problem in the related art of limited antenna space on a 5G deployment surface can be solved.

## Description

### Cross-Reference to Related Application

The present invention claims priority to Chinese Patent Application CN202110798479.8, filed on July, 15, 2021 and entitled "Base Station Device", the invention of which is hereby incorporated by reference in its entirety.

### Technical Field

The present invention relates to the technical field of base station devices, and in particular to a base station device.

### Background

At present, in the era of transitioning from 4G to 5G, because the 4G base station communication industry and the 5G base station communication industry will coexist for a considerable amount of time, it is necessary to build a sufficient number of 5G base station devices based on existing 4G base station devices to meet the coverage and usage requirements.

However, in this way, the resources of base station sites are very valuable, so that antenna space on a 5G deployment surface is limited. In addition, re-building a sufficient number of 5G base station devices may increase the mounting difficulty and mounting cost.

### Summary

The main purpose of the present invention is to provide a base station device so as to solve the technical problem in the related art of limited antenna space on a 5G deployment surface.

In order to achieve the above purpose, the present invention provides a base station device, including: an active component, the active component including an active antenna and a first mounting structure, the active antenna being mounted on the first mounting structure; and a passive antenna component, the passive antenna component including a passive antenna and a second mounting structure, the passive antenna being mounted on the second mounting structure. The first mounting structure and the second mounting structure are independently arranged and connected.

In an embodiment, the active antenna and the passive antenna are arranged at intervals.

In an embodiment, the first mounting structure is detachably connected to second mounting structure.

In an embodiment, the first mounting structure includes a first mounting beam, the active antenna being mounted on the side of the first mounting beam. The second mounting structure includes a second mounting beam, the passive antenna being mounted on the side of the second mounting beam. The first mounting beam is detachably connected to the second mounting beam.

In an embodiment, the first mounting beam is provided with a first open slot, and the first open slot extends in an extension direction of the first mounting beam. The second mounting beam is provided with a second open slot, and the second opening slot extends in an extension direction of the second mounting beam. The width of the first open slot is greater than that of the second mounting beam, so that the second mounting beam is mounted in the first open slot. Or the width of the second open slot is greater than that of the first mounting beam, so that the first mounting beam is mounted in the second open slot.

In an embodiment, the first mounting structure further includes a support plate, arranged on the first mounting beam and the support plate being configured to support the active antenna; and a first connecting plate, arranged on the first mounting beam, the first connecting plate and the support plate being arranged at intervals, the first connecting plate and the support plate being located on the same side of the first mounting beam, and the first connecting plate being configured for connecting to the active antenna.

In an embodiment, the active component further includes a protective structure, arranged on the side, far away from the first mounting structure, of the active antenna, the protective structure including a protective housing, the protective housing wrapping at least partially outside the active antenna to protect the active antenna.

In an embodiment, the protective housing is provided with a strip-shaped mounting groove extending in an extension direction of the protective housing, and the active antenna is mounted in the strip-shaped mounting groove.

In an embodiment, the protective structure further includes a support piece, arranged on the protective housing and located on the side, close to the active antenna, of the protective housing, and at least part of the support piece being located at the bottom of the active antenna to support the active antenna.

In an embodiment, the strip-shaped mounting groove is provided with a first protective edge and a second protective edge which are oppositely arranged, and the first protective edge and the second protective edge extend in the extension direction of the protective housing. The protective structure further includes a support rod set, including a first support rod, a second support rod, and a third support rod which are connected in sequence, the first support rod being arranged at the first protective edge, the second support rod being arranged at the second protective edge, and the second support rod being located between the first protective edge and the second protective edge to support the active antenna through the second support rod.

In an embodiment, the protective structure further includes: a second connecting plate, the second connecting plate being arranged on the first support rod, and the second connecting plate being configured for connecting to the active antenna; and/or, a third connecting plate, the third connecting plate being arranged on the third support rod, and the third connecting plate being configured for connecting to the active antenna.

In an embodiment, the second mounting structure further includes a connecting assembly, arranged between the first mounting beam and the passive antenna, so that the first mounting beam is connected to the passive antenna through the connecting assembly.

In an embodiment, the connecting assembly includes: a first connecting piece, one end of the first connecting piece being connected to the first mounting beam, and the other end of the first connecting piece being connected to the passive antenna; and a second connecting piece, the second connecting piece and the first connecting piece being arranged at intervals, one end of the second connecting piece being connected to the first mounting beam, and the other end of the second connecting piece being connected to the passive antenna.

In an embodiment, the second connecting piece includes: a connecting beam, one end of the connecting beam being connected to the second mounting beam; and a connecting seat, one end of the connecting seat being hinged with the other end of the connecting beam, and the other end of the connecting seat being connected to the passive antenna.

In an embodiment, the base station device further includes: a pole mounting apparatus, the active component and the passive antenna component being connected to the pole mounting apparatus, the pole mounting apparatus being mounted on the mounting rod, and the pole mounting apparatus including a plurality of connecting parts. There are the plurality of connecting parts, the plurality of connecting parts are arranged at intervals, at least one connecting part is connected to the active component, and at least one connecting part is connected to the passive antenna component. Or there are two connecting parts, one connecting part is connected to the active component, and the other connecting part is connected to the passive antenna component.

By applying the technical solution of the present invention, the active antenna and the passive antenna are arranged in the base station device at the same time. By arranging the first mounting structure and the second mounting structure, the active antenna and the passive antenna can be combined into the same base station device in a simple and reliable manner, it is ensured that the active antenna and the passive antenna are reliably fixed, the occupied space is small, and the antenna space is effectively and fully utilized. The active component in the embodiment is mainly composed of an Active Antenna Unit (AAU), which also solves the difficulties such as valuable site resources, limited antenna space, and wind load limitation of a tower during 5G deployment.

### Brief Description of the Drawings

The accompanying drawings of the specification, which constitute a part of the present invention, are intended to provide a further understanding the present invention, and the exemplary embodiments of the present invention and the description thereof are used to explain the present invention, but do not constitute improper limitations to the present invention. In the drawings:
Fig. 1 shows a schematic diagram of mounting of a base station device according to an embodiment of the present invention.
Fig. 2 shows a schematic structural diagram of an active component according to an embodiment of the present invention.
Fig. 3 shows a schematic structural diagram of a protective structure according to an embodiment of the present invention.
Fig. 4 shows a schematic structural diagram of a passive antenna component according to an embodiment of the present invention.
Fig. 5 shows a schematic structural diagram of a second connecting piece according to an embodiment of the present invention.
Fig. 6 shows a schematic structural diagram of a base station device provided with three connecting parts according to an embodiment of the present invention.
Fig. 7 shows a schematic structural diagram of a base station device provided with two connecting parts according to an embodiment of the present invention.
Fig. 8 shows a schematic diagram of a mounting structure of an active component and a passive antenna component according to an embodiment of the present invention.
Fig. 9 shows a schematic diagram of a mounting structure of a first mounting beam and a second mounting beam according to an embodiment of the present invention.
Fig. 10 shows a schematic structural diagram of a second mounting beam according to an embodiment of the present invention.

Herein, the above accompanying drawings include the following reference signs.

10. Active component; 11. Active antenna; 12. First mounting structure; 121. First mounting beam; 122. Support plate; 123. First connecting plate; 13. Protective structure; 131. Protective housing; 132. Support rod set; 133. Second connecting plate; 134. Third connecting plate; 135. Protective end cover; 20. Passive antenna component; 21. Passive antenna; 22. Second mounting structure; 221. Second mounting beam; 222. First connecting piece; 223. Second connecting piece; 2231. Connecting beam; 2232. Connecting seat; 30. Pole mounting apparatus; 31. Connecting part; 40. Mounting rod.

### Detailed Description of the Embodiments

It is to be noted that the embodiments in the present invention and features in the embodiments may be combined with each other without conflict. The present invention is described below with reference to the accompanying drawings and in conjunction with the embodiments in detail.

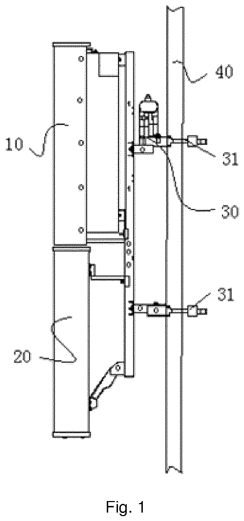

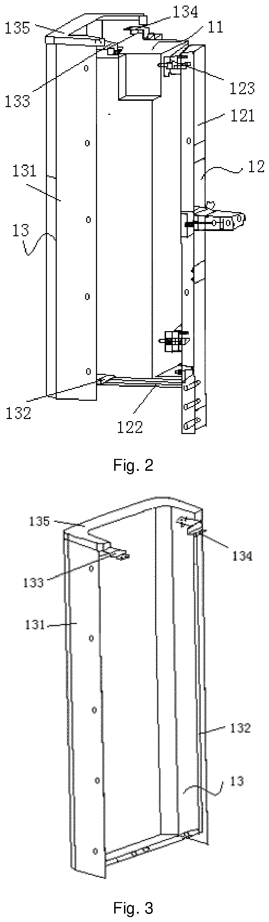

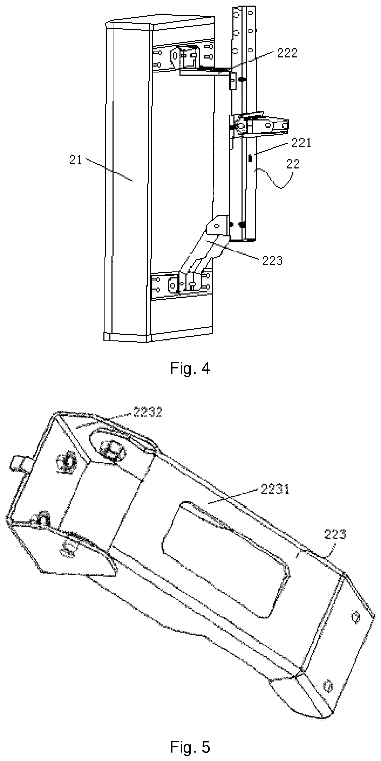

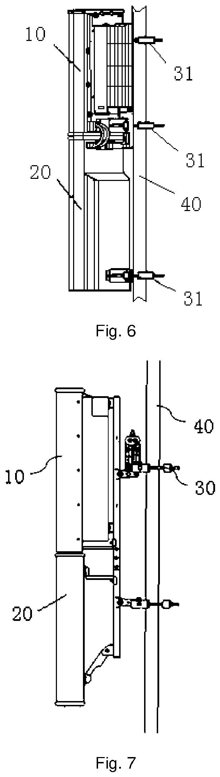

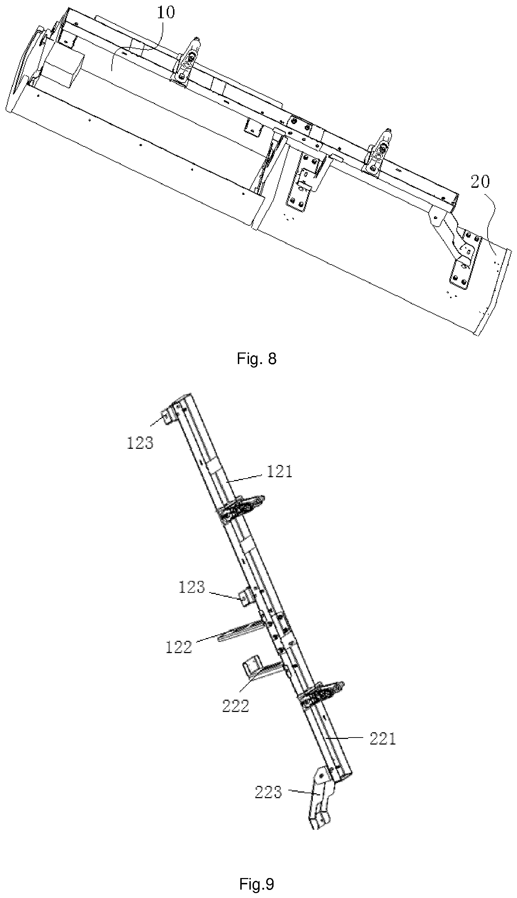

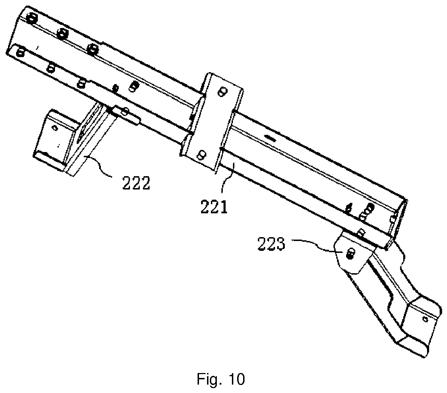

As shown in Fig. 1 to Fig. 10, an embodiment of the present invention provides a base station device. The base station device includes an active component 10 and a passive antenna component 20. The active component 10 includes an active antenna 11 and a first mounting structure 12, the active antenna 11 being mounted on the first mounting structure 12. The passive antenna component 20 includes a passive antenna 21 and a second mounting structure 22, the passive antenna 21 being mounted on the second mounting structure 22. The first mounting structure 12 and the second mounting structure 22 are independently arranged and connected.

Through the adoption of the structural arrangement, the active antenna 11 and the passive antenna are arranged in the base station device at the same time. By arranging the first mounting structure 12 and the second mounting structure 22, the active antenna 11 and the passive antenna 21 can be combined into the same base station device in a simple and reliable manner, it is ensured that the active antenna and the passive antenna are reliably fixed, the occupied space is small, and the antenna space is effectively and fully utilized. The active component 10 in the embodiment is mainly composed of an AAU, which also solves the difficulties such as valuable site resources, limited antenna space, and wind load limitation of a tower during 5G deployment.

Specifically, in the embodiment, the active antenna 11 and the passive antenna 21 are arranged at intervals. Through the adoption of the structural arrangement, the interference between the signal sending and receiving of the active antenna 11 and the passive antenna 21 can be avoided, and it is ensured that the active antenna 11 and the passive antenna 21 can send and receive signals normally to meet the usage requirement. Specifically, the interval arrangement in the embodiment refers to a certain distance between two objects.

Preferably, in the embodiment, the first mounting beam 121 and the second mounting beam 221 extend in a vertical direction, and the first mounting beam 121 is connected to the second mounting beam 221 in the vertical direction, so that the active antenna 11 and the passive antenna 21 are arranged at intervals in the vertical direction. Through the adoption of the structural arrangement, the transverse occupied space of the base station device can be reduced, and the active antenna 11 and the passive antenna 21 can alsosend and receive the signals normally.

In the embodiment, the first mounting structure 12 is detachably connected to the second mounting structure 22. Through the adoption of the structural arrangement, the active component 10 and the passive antenna component 20 can respectively form two independent mounting structures, which facilitates the independent mounting and dismounting of the active component 10 and the passive antenna component 20 for ease of operation. Specifically, in the embodiment, the first mounting structure 12 and the second mounting structure 22 may be fixedly connected through bolts.

Specifically, in the embodiment, the first mounting structure 12 includes a first mounting beam 121, the active antenna 11 being mounted on the side of the first mounting beam 121. The second mounting structure 22 includes a second mounting beam 221, the passive antenna 21 being mounted on the side of the second mounting beam 221. The first mounting beam 121 is detachably connected to the second mounting beam 221. Through the adoption of the structural arrangement, only the first mounting beam 121 and the second mounting beam 221 need to be mounted and dismounted to complete the mounting and dismounting of the active component 10 and the passive antenna component 20, so as to facilitate the mounting and dismounting and protection of the active antenna 11 and the passive antenna 21.

In the embodiment, the first mounting beam 121 is provided with a first open slot, and the first open slot extends in an extension direction of the first mounting beam 121. The second mounting beam 221 is provided with a second open slot, and the second opening slot extends in an extension direction of the second mounting beam 221. Specifically, the width of the first open slot may be greater than that of the second mounting beam 221, so that the second mounting beam 221 is mounted in the first open slot; or the width of the second open slot is greater than that of the first mounting beam 121, so that the first mounting beam 121 is mounted in the second open slot. Through the adoption of the structural arrangement, the mounting and dismounting of the first mounting beam 121 and the second mounting beam 221 can be facilitated for ease of operation.

Preferably, in the embodiment, the first mounting beam 121 and the second mounting beam 221 are of beam structures with U-shaped cross sections.

In the embodiment, the first mounting structure 12 further includes a support plate 122 and a first connecting plate 123. The support plate 122 is arranged on the first mounting beam 121, and the support plate 122 is configured to support the active antenna 11. The first connecting plate 123 is arranged on the first mounting beam 121, the first connecting plate 123 and the support plate 122 are arranged at intervals, the first connecting plate 123 and the support plate 122 are located on the same side of the first mounting beam 121, and the first connecting plate 123 is configured for connecting to the active antenna 11. Through the adoption of the structural arrangement, the mounting stability of the active antenna 11 can be improved. Preferably, there may be a plurality of first connecting plates 123, the plurality of first connecting plates 123 are arranged at intervals in a direction of the first mounting beam 121, and at least one mounting beam is located at one end, far away from the support plate 122, of the active antenna 11, so that the arrangement stability of the active antenna 11 is better improved.

Specifically, in the embodiment, the active component 10 further includes a protective structure 13, the protective structure 13 being arranged on the side, far away from the first mounting structure 12, of the active antenna 11, the protective structure 13 including a protective housing 131, the protective housing 131 wrapping at least partially outside the active antenna 11 to protect the active antenna 11. Through the adoption of the structural arrangement, the active antenna 11 can be effectively protected by means of the protective housing 131.

In the embodiment, the protective housing 131 is provided with a strip-shaped mounting groove extending in an extension direction of the protective housing 131, and the active antenna 11 is mounted in the strip-shaped mounting groove. Through the adoption of the structural arrangement, the mounting of the active antenna 11 can be facilitated to improve the convenience for mounting and the mounting stability of the active antenna 11. Preferably, in the embodiment, the protective housing 131 includes a first strip plate, a second strip plate, and a third strip plate which are connected in sequence, the first strip plate, the second strip plate, and the third strip plate enclosing the strip-shaped mounting groove. The structure is simple, production and manufacturing are facilitated, and the active antenna 11 can be effectively protected.

Specifically, in the embodiment, the protective structure 13 further includes a support piece, arranged on the protective housing 131 and located on the side, close to the active antenna 11, of the protective housing 131, at least part of the support piece being located the bottom of the active antenna 11 to support the active antenna 11. Through the adoption of the structural arrangement, the arrangement stability of the active antenna 11 can be further improved.

In the embodiment, the strip-shaped mounting groove is provided with a first protective edge and a second protective edge which are oppositely arranged, and the first protective edge and the second protective extension direction of the protective housing 131. The first protective edge and the second protective edge are located on both sides of the strip-shaped mounting groove. The protective structure 13 further includes a support rod set 132. The support rod set 132 includes a first support rod, a second support rod, and a third support rod which are connected in sequence, the first support rod being arranged at the first protective edge, the second support rod being arranged at the second protective edge, and the second support rod being located between the first protective edge and the second protective edge to support the active antenna 11 through the second support rod. Through the adoption of the structural arrangement, the support stability can be further improved to better protect the active antenna 11.

Specifically, the protective structure 13 further includes a second connecting plate 133, the second connecting plate 133 being arranged on the first support rod, and the second connecting plate 133 being configured for connecting to the active antenna 11. Or the protective structure 13 further includes a third connecting plate 134, the third connecting plate 134 being arranged on the third support rod, and the third connecting plate 134 being configured for connecting to the active antenna 11. Or the protective structure 13 further includes the second connecting plate 133 and the third connecting plate 134, the second connecting plate 133 being arranged on the first support rod, and the second connecting plate 133 being configured for connecting to the active antenna 11. The third connecting plate 134 is arranged on the third support rod, and the third connecting plate 134 is configured for connecting to the active antenna 11.

Preferably, in the embodiment, the protective structure 13 further includes the second connecting plate 133 and the third connecting plate 134, the second connecting plate 133 being arranged on the first support rod, and the second connecting plate 133 being configured for connecting to the active antenna 11. The third connecting plate 134 is arranged on the third support rod, and the third connecting plate 134 is configured for connecting to the active antenna 11. Through the adoption of the structural arrangement, the active antenna 11 can be better mounted stably.

Preferably, in the embodiment, the support rod set 132, the second connecting plate 133, and the third connecting plate 134 are integrally formed to facilitate production, manufacturing and mounting.

In the embodiment, the protective structure 13 further includes a protective end cover 135. The protective end cover 135 is arranged at the end of the protective housing 131, so as to better protect the active antenna 11 through the protective end cover 135.

Specifically, in the embodiment, the second mounting structure 22 further includes a connecting assembly. The connecting assembly is arranged between the first mounting beam 121 and the passive antenna 21, so that the first mounting beam 121 is connected to the passive antenna 21 through the connecting assembly. Through the adoption of the structural arrangement, the connection stability of the first mounting beam 121 and the passive antenna 21 can be improved to ensure the arrangement stability of the passive antenna 21.

Preferably, in the embodiment, the overall width of the active component 10 is approximately the same as that of the passive antenna component 20, thereby facilitating the optimization of the overall appearance. Specifically, the transverse width of the connecting assembly may be adjusted, so that the transverse width of the connecting assembly is arranged within an appropriate range, thereby ensuring that the overall width of the active component 10 and the passive antenna component 20 remain consistent.

In the embodiment, the connecting assembly includes a first connecting piece 222 and a second connecting piece 223, one end of the first connecting piece 222 being connected to the first mounting beam 121, and the other end of the first connecting piece 222 being connected to the passive antenna 21. The second connecting piece 223 and the first connecting piece 222 are arranged at intervals, one end of the second connecting piece 223 is connected to the first mounting beam 121, and the other end of the second connecting piece 223 is connected to the passive antenna 21. Through the adoption of the structural arrangement, the mounting stability of the passive antenna 21 can be better improved.

Specifically, in the embodiment, the second connecting piece 223 includes a connecting beam 2231 and a connecting seat 2232, one end of the connecting beam 2231 being connected to the second mounting beam 221. One end of the connecting seat 2232 is hinged with the other end of the connecting beam 2231, and the other end of the connecting seat 2232 is connected to the passive antenna 21. Through the adoption of the structural arrangement, the mounting can be better performed by adjusting an angle between the connecting beam 2231 and the connecting seat 2232, so as to effectively release the internal stress generated during mounting, thereby improving the mounting stability. Specifically, in the embodiment, the connecting beam 2231 is connected to the connecting seat 2232 through screws to achieve hinged rotation.

In the embodiment, the base station device further includes a pole mounting apparatus 30, the active component 10 and the passive antenna component 20 being connected to the pole mounting apparatus 30, the pole mounting apparatus 30 being mounted on the mounting rod 40, and the pole mounting apparatus 30 including a plurality of connecting parts 31.

In one embodiment, there are the plurality of connecting parts 31, the plurality of connecting parts 31 are arranged at intervals, at least one connecting part 31 is connected to the active component 10, and at least connecting part 31 is connected to the passive antenna component 20. Through the adoption of the structural arrangement, both the active component 10 and the passive antenna component 20 can be stably connected to the pole mounting apparatus 30. Specifically, there may be three connecting parts 31 to achieve a three-point connection.

In another embodiment, there are two connecting parts 31, one connecting part 31 is connected to the active component 10, and the other connecting part 31 is connected to the passive antenna component 20. Through the adoption of the structural arrangement, both the active component 10 and the passive antenna component 20 can be stably connected to the pole mounting apparatus 30. There are two connecting parts 31 here to achieve a two-point connection, so that the stepless adjustment can be achieved to improve the adjustment range, and the adjustable mechanical downtilt meets the requirements to facilitate the adaptive operation.

Through the adoption of the base station device provided in the above embodiment, during mounting and use, the active component 10 and the passive antenna component 20 may be mounted under the tower respectively, then the first mounting beam 121 and the second mounting beam 221 are inserted and then fixed by screw joint, then the active component 10 and the passive antenna component 20 are mounted on the pole mounting apparatus 30 by screws, and finally the whole base station device is fixed to a mounting rod 40 (pole). The base station device in the embodiment can achieve the active and passive integration, occupy a small space, and solve the problem of limited resources of some sites.

From the above description, it can be seen that the above-mentioned embodiment of the present invention achieves the following technical effects: the antenna space is effectively utilized, the difficulty in site mounting is reduced, the aesthetics is improved, the mounting cost is reduced, the number of times the worker gets on the tower is reduced, the space is saved, the coverage is improved, and the problems of coverage shrinkage, wind load limitation of the iron tower and the like caused by the limited antenna space on a 5G deployment surface, low hanging height and the like are solved.

It is to be noted that the terms used herein is only for the purpose of describing the specific implementations and is not intended to limit the exemplary implementations of the present invention. As used herein, the singular form is also intended to include the plural form unless otherwise expressly stated in the context, and it should also be understood that when the terms "contain" and/or "include" are used in the specification, they indicate the presence of features, steps, operations, devices, components and/or combinations thereof.

Unless otherwise specified, the relative arrangement, numerical expressions and numerical values of parts and steps set forth in these embodiments do not limit the scope of the present invention. Also, it should be understood that, for ease of description, the dimensions of various parts shown in the accompanying drawings are not drawn to scale. Techniques, methods, and devices known to those of ordinary skill in the related fields may not be discussed in detail, but should be regarded as part of the specification under appropriate circumstances. In all examples shown and discussed herein, any specific value should be interpreted as exemplary only and not as a limitation. Thus, other examples of the exemplary embodiments may have different values. It is to be noted that: similar numbers and letters refer to similar items in the following accompanying drawings, and thus, once an item is defined in one accompanying drawing, it does not require further discussion in subsequent accompanying drawings.

In the description of the present invention, it is to be understood that the orientations or positional relationships indicated by the orientation words "front, rear, upper, down, left and right", "transverse, longitudinal, vertical and horizontal", "top and bottom", etc. are based on the orientations or positional relationships shown in the accompanying drawings, and are only for the convenience of describing the present invention and simplifying the description. Unless stated to the contrary, these orientation words do not indicate or imply that the apparatus or element referred to must have a specific orientation, be constructed and operated in a specific orientation, and therefore cannot be construed as limiting the scope of protection of the present invention. The orientation words "inside and outside" refer to inside and outside relative to the outline of each part itself.

For ease of description, spatially relative terms, such as "over", "above", "on the surface", "upper", etc., may be used herein to describe the spatial positional relationship between a device or feature and other devices or features as shown in the figures. It should be understood that the spatially relative terms are intended to include different orientations of the device in use or operation in addition to the orientation described in the figures. For example, if the devices in the accompanying drawings are inverted, those described as "above other devices or structures" or "over other devices or structures" will then be positioned as "below other devices or structures" or "under other devices or structures". Thus, the exemplary term "above" may include both "above" and "below" orientations. The device may also be positioned in various other ways (rotated 90 degrees or at other orientations) and the spatially relative descriptions used herein are interpreted accordingly.

Furthermore, it is to be noted that the use of the words "first", "second" and the like to define parts is only for the convenience of distinguishing the corresponding parts, unless otherwise stated, the words have no special meaning, and therefore cannot be construed as limiting the scope of protection of the present invention.

The above are only the preferred embodiments of the present invention and are not intended to limit the present invention. For those skilled in the art, the present invention may have various modifications and variations. Any modifications, spirit and equivalent replacements, improvements and the like made within the spirit and principle of the present invention shall fall within the scope of protection of the present invention.

## Claims

1. A base station device, comprising:
an active component (10), the active component (10) comprising an active antenna (11) and a first mounting structure (12), the active antenna (11) being mounted on the first mounting structure (12); and
a passive antenna component (20), the passive antenna component (20) comprising a passive antenna (21) and a second mounting structure (22), the passive antenna (21) being mounted on the second mounting structure (22);
wherein the first mounting structure (12) and the second mounting structure (22) are independently arranged and connected.

2. The base station device according to claim 1, wherein the active antenna (11) and the passive antenna (21) are arranged at intervals.

3. The base station device according to claim 1, wherein the first mounting structure (12) is detachably connected to the second mounting structure (22).

4. The base station device according to claim 3, wherein the first mounting structure (12) comprises a first mounting beam (121), the active antenna (11) being mounted on the side of the first mounting beam (121); the second mounting structure (22) comprises a second mounting beam (221), the passive antenna (21) being mounted on the side of the second mounting beam (221); and the first mounting beam (121) is detachably connected to the second mounting beam (221).

5. The base station device according to claim 4, wherein the first mounting beam (121) is provided with a first open slot, and the first open slot extends in an extension direction of the first mounting beam (121); the second mounting beam (221) is provided with a second open slot, and the second opening slot extends in an extension direction of the second mounting beam (221);
the width of the first open slot is greater than that of the second mounting beam (221), so that the second mounting beam (221) is mounted in the first open slot;
or the width of the second open slot is greater than that of the first mounting beam (121), so that the first mounting beam (121) is mounted in the second open slot.

6. The base station device according to claim 4, wherein the first mounting structure (12) further comprises:
a support plate (122), arranged on the first mounting beam (121), the support plate (122) being configured to support the active antenna (11); and
a first connecting plate (123), arranged on the first mounting beam (121), the first connecting plate (123) and the support plate (122) being arranged at intervals, the first connecting plate (123) and the support plate (122) being located on the same side of the first mounting beam (121), and the first connecting plate (123) being configured for connecting to the active antenna (11).

7. The base station device according to claim 1, wherein the active component (10) further comprises:
a protective structure (13), arranged on the side, far away from the first mounting structure (12), of the active antenna (11), the protective structure (13) comprising a protective housing (131), the protective housing (131) wrapping at least partially outside the active antenna (11) to protect the active antenna (11).

8. The base station device according to claim 7, wherein the protective housing (131) is provided with a strip-shaped mounting groove extending in an extension direction of the protective housing (131), and the active antenna (11) is mounted in the strip-shaped mounting groove.

9. The base station device according to claim 7, wherein the protective structure (13) further comprises:
a support piece, arranged on the protective housing (131) and located on the side, close to the active antenna (11), of the protective housing (131), at least part of the support piece being located at the bottom of the active antenna (11) to support the active antenna (11).

10. The base station device according to claim 8, wherein the strip-shaped mounting groove is provided with a first protective edge and a second protective edge which are oppositely arranged, and the first protective edge and the second protective edge extend in the extension direction of the protective housing (131); the protective structure (13) further comprises:
a support rod set, comprising a first support rod, a second support rod, and a third support rod which are connected in sequence, the first support rod being arranged at the first protective edge, the second support rod being arranged at the second protective edge, and the second support rod being located between the first protective edge and the second protective edge to support the active antenna (11) through the second support rod.

11. The base station device according to claim 10, wherein the protective structure (13) further comprises:
a second connecting plate (133), the second connecting plate (133) being arranged on the first support rod, and the second connecting plate (133) being configured for connecting to the active antenna (11); and/or,
a third connecting plate (134), the third connecting plate (134) being arranged on the third support rod, and the third connecting plate (134) being configured for connecting to the active antenna (11).

12. The base station device according to claim 4, wherein the second mounting structure (22) further comprises:
a connecting assembly, arranged between the first mounting beam (121) and the passive antenna (21), so that the first mounting beam (121) is connected to the passive antenna (21) through the connecting assembly.

13. The base station device according to claim 12, wherein the connecting assembly comprises:
a first connecting piece (222), one end of the first connecting piece (222) being connected to the first mounting beam (121), and the other end of the first connecting piece (222) being connected to the passive antenna (21); and
a second connecting piece (223), the second connecting piece (223) and the first connecting piece (222) being arranged at intervals, one end of the second connecting piece (223) being connected to the first mounting beam (121), and the other end of the second connecting piece (223) being connected to the passive antenna (21).

14. The base station device according to claim 13, wherein the second connecting piece (223) comprises:
a connecting beam (2231), one end of the connecting beam (2231) being connected to the second mounting beam (221); and
a connecting seat (2232), one end of the connecting seat (2232) being hinged with the other end of the connecting beam (2231), and the other end of the connecting seat (2232) being connected to the passive antenna (21).

15. The base station device according to any one of claims 1 to 14, further comprising:
a pole mounting apparatus (30), the active component (10) and the passive antenna component (20) being connected to the pole mounting apparatus (30), the pole mounting apparatus (30) being mounted on the mounting rod, and the pole mounting apparatus (30) comprising a plurality of connecting parts (31);
there are the plurality of connecting parts (31), the plurality of connecting parts (31) are arranged at intervals, at least one connecting part (31) is connected to the active component (10), and at least one connecting part (31) is connected to the passive antenna component (20);
or there are two connecting parts (31), one connecting part (31) is connected to the active component (10), and the other connecting part (31) is connected to the passive antenna component (20).
